# FASCICULE DE BREVET EUROPEEN

(11) **EP 1 443 620 B1**
(45) Date de publication et mention de la délivrance du brevet: **09.08.2006**
(21) Numéro de dépôt: 04290176.9
(22) Date de dépôt: 23.01.2004
(51) Int. Cl.: H02G 3/04

(54) **Système de modification de la structure d'un harnais électrique**
System zum Ändern der Struktur eines elektrischen Kabelbaumes
System for modifying the structure of an electrical harness

(30) Priorité: 29.01.2003 FR 0300968
(43) Date de publication de la demande: 04.08.2004
(73) Titulaire: LABINAL, 78180 Montigny-le-Bretonneux (FR)
(72) Inventeur: Dunand, Michel, 31130 Balma (FR); Guerrero, Sébastien, 31620 Fronton (FR)
(74) Mandataire: Intes, Didier Gérard André

(56) Documents cités:
- US-A- 5 091 604
- US-A- 5 126 507
- US-A1- 2002 179 318

## Description

La présente invention concerne un système de modification de la structure d'un harnais électrique surtressé, la modification pouvant consister soit dans une réparation du harnais, soit dans l'adjonction de câbles conducteurs à ceux préexistant déjà dans le harnais.

L'invention concerne également un harnais électrique surtressé modifiable par adjonction d'au moins un câble conducteur.

Un harnais électrique est un ensemble de fils électriques de différentes jauges blindées ou non, cheminant ensuite et aboutissant à des connecteurs. L'ensemble des fils électriques ou câbles constitue un toron.

Le harnais est dit "blindé" lorsqu'un conducteur constitué par exemple par une tresse de blindage enveloppe jusqu'au connecteur l'ensemble du harnais et ses éventuelles branches de dérivation.

Un harnais est dit surtressé lorsque la ou les tresses de blindage sont en contact intime avec les éléments conducteurs ou câbles formant le toron du harnais.

Le harnais comporte le plus souvent un toron principal et des dérivations constituant des torons ou branches secondaires. En outre, le harnais peut traverser des parois ou cloisons conductrices. Dans ce cas, le blindage du harnais doit être raccordé à ces cloisons conductrices.

Le harnais peut comporter sur une branche secondaire ou sur un toron principal une des transitions qui sont des éléments de blindage permettant de raccorder ensemble d'un côté de la transition un surtressage et de l'autre un conduit blindé.

Dans certains cas, il peut être nécessaire d'adjoindre de nouveaux fils conducteurs à ceux préexistant dans le harnais, soit pour réparer un harnais endommagé, soit pour ajouter des câbles au harnais initial, ce qui permet d'inclure des fonctionnalités additionnelles pour le harnais.

Par modification du harnais dans le présent texte, on entend l'adjonction de nouveaux câbles électriques à ceux préexistant dans le harnais, que cette adjonction soit justifiée par un endommagement du harnais ou par l'adjonction de nouvelles fonctionnalités.

Pour permettre la modification d'un harnais électrique, il est connu de prévoir dans certaines branches du harnais, des gaines de réserve, c'est-à-dire des tubes permettant l'ajout de câbles électriques au toron préexistant du harnais et s'étendant sur toute la longueur du harnais. Dans ce cas, le harnais est dit modifiable, car il est possible alors d'ajouter des câbles au harnais initial sans autre modification en introduisant ceux-ci dans le tube de réserve.

Pour doubler un câble endommagé ou inclure des fonctionnalités additionnelles à un harnais surtressé ou dans une partie surtressée d'un harnais blindé non équipé de gaines de réserve, il est courant d'utiliser un kit blindé. Le kit blindé est un harnais blindé non équipé de connecteurs et conçu pour être installé concurremment à la partie du harnais à modifier. Le kit contiendra seulement l'ensemble des câbles nécessaires à la modification. Le blindage du kit est terminé à ses extrémités par une portion de tresse appelée habituellement "queue de cochon" qui sert à réaliser la continuité du blindage entre la tresse du harnais et celle du kit de blindage. Cependant, le montage de ce kit de blindage sur le harnais, est long et il risque d'altérer la qualité de blindage de la tresse.

On comprend dès à présent que le problème est particulièrement délicat à résoudre au niveau des connecteurs du harnais, au niveau des traversées de cloisons conductrices, au niveau des dérivations et au niveau des transitions.

Le US-A-5 091 604 décrit un harnais constitué par une partie principale raccordée à un connecteur et par deux branches raccordées à la partie principale. Des dispositions particulières sont prises pour assurer la continuité de la tresse de blindage au niveau des raccordements.

Un premier objet de la présente invention est donc de fournir un système de modification d'un harnais électrique surtressé qui permet la modification du harnais sans nécessiter des opérations longues ou complexes et sans altérer la qualité du blindage constitué essentiellement par la tresse externe du harnais.

Pour atteindre ce but l'invention concerne un système de modification d'un harnais électrique surtressé, ledit harnais comprenant au moins un toron de câbles conducteurs entouré par une tresse de surtressage et au moins une extrémité de ladite tresse. Ledit système de modification se caractérise en ce qu'il comprend :
- au moins un élément conducteur de modification constitué par au moins un câble conducteur entouré par une tresse de blindage ladite tresse présentant deux extrémités et le câble conducteur dépassant aux deux extrémités de la tresse ;
- au moins une portion de gaine de réserve comprenant une portion de tube souple montée en partie dans la tresse dudit harnais de telle manière qu'une première extrémité dudit tube débouche au-delà de l'extrémité de ladite tresse du harnais et que la deuxième extrémité du tube soit extérieure à ladite tresse du harnais, au moins ladite partie de portion de tube extérieure à la tresse du harnais étant entourée par une tresse de surtressage ; et
- des moyens de connexion de tresse pour relier l'extrémité de la tresse de l'élément conducteur de modification à l'extrémité de la tresse entourant la partie extérieure dudit tube, ledit câble conducteur de l'élément conducteur de modification étant engagé dans ledit tube et débouchant à la première extrémité dudit tube.

On comprend que grâce à la mise en place aux extrémités de la tresse externe du harnais ou de certaines branches du harnais d'une portion de gaine de réserve de longueur limitée, ces extrémités de la tresse de blindage correspondant à un connecteur à une traversée de cloison conductrice ou à une dérivation ou une transition, il est possible de monter des éléments électriques de modification correspondant au kit de blindage décrit ci-dessus sans avoir à altérer la tresse de blindage du harnais ou des différentes branches du harnais et sans avoir à effectuer des opérations complexes. En effet, la tresse interne de la gaine de réserve peut être aisément raccordée à la tresse de l'élément conducteur de modification alors que le fil conducteur de l'élément conducteur de modification peut être aisément introduit dans le tube de la gaine de réserve.

Selon un mode préféré de mise en oeuvre, l'élément conducteur de modification ou kit de blindage comporte en outre un tube souple dans lequel est passé le fil conducteur et sur lequel est réalisée la tresse de blindage.

Un autre objet de l'invention est de fournir un harnais électrique présentant des caractéristiques permettant la mise en place aisée d'éléments conducteurs de modification.

Le harnais électrique surtressé modifiable par adjonction d'au moins un câble électrique, comprend au moins un toron de câbles conducteurs entouré par une tresse de surtressage et au moins une extrémité de ladite tresse. Le harnais se caractérise en ce qu'il comprend en outre :
- au moins une portion de gaine de réserve comprenant une portion de tube simple montée en partie dans la tresse dudit harnais de telle manière qu'une première extrémité dudit tube débouche au-delà de l'extrémité de ladite tresse du harnais et que la deuxième extrémité du tube soit extérieure à ladite tresse du harnais, au moins ladite partie de portion de tube extérieure à la tresse du harnais étant entourée par une tresse de surtressage par quoi un élément conducteur de modification est apte à être connecté à ladite deuxième extrémité de la portion de gaine de réserve.

D'autres caractéristiques et avantages de l'invention apparaîtront mieux à la lecture de la description qui suit de plusieurs modes de mise en oeuvre de l'invention donnés à titre d'exemple non limitatif. La description se réfère aux figures annexées sur lesquelles :
- la figure 1 montre un exemple de réalisation de harnais électrique;
- la figure 2 montre, en coupe longitudinale, un élément conducteur de modification ou « kit de blindage » ;
- la figure 3 illustre la connexion entre un élément conducteur de modification et une gaine de réserve ;
- la figure 4 montre, en coupe longitudinale, un premier exemple de réalisation du harnais dans une zone de fixation à un connecteur ;
- la figure 5 montre une variante de réalisation de l'exemple monté sur la figure 4 ;
- la figure 6 montre, en coupe longitudinale, un exemple de réalisation du harnais dans la zone de traversée d'une cloison ;
- la figure 7 montre, en coupe longitudinale, un exemple de réalisation du harnais dans une zone de dérivation ; et
- la figure 8 montre, en coupe longitudinale, un exemple de réalisation du harnais dans une zone de transition.

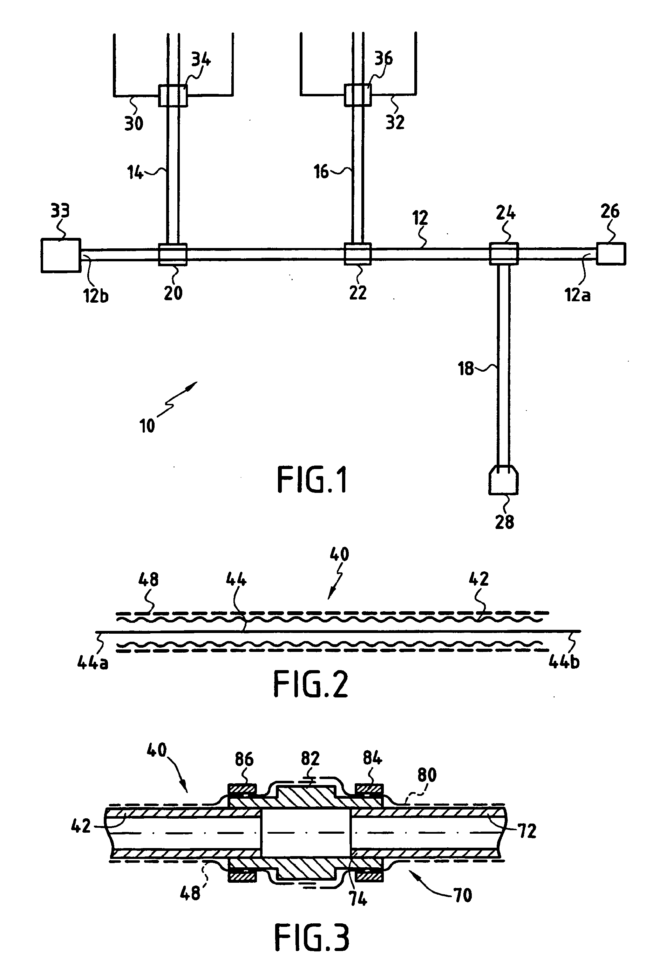

En se référant tout d'abord à la figure 1, on va décrire un exemple de réalisation de harnais électrique.

Le harnais 10 comprend un conducteur principal 12 et des branches secondaires 14, 16 et 18. Les branches secondaires peuvent être raccordées au conducteur principal par des dérivations 20, 22 et 24. Dans l'exemple représenté l'extrémité 12a du conducteur principal est câblé sur un connecteur 26 et l'extrémité de la branche 18 est câblée à un connecteur 28. Les branches 14 et 16 traversent les cloisons 30 et 32 par des traversées 34 et 36 et l'extrémité 12b traverse la transition 33.

Comme on l'a déjà expliqué, l'invention consiste à équiper localement le conducteur principal 12 ou les branches telles que 14, 16 et 18 de gaines de réserve, en particulier dans les zones de connexion au connecteur dont les zones de traversées de paroi ou dans les zones de dérivation. Comme on l'expliquera plus en détails ultérieurement, l'extrémité de la gaine de réserve est destinée à être raccordée à un élément conducteur de modification 40 ou kit de blindage. Comme cela est montré sur la figure 2, l'élément conducteur de modification est constitué par un tube souple 42 dont la paroi externe est éventuellement cannelée pour la rigidifier tout en lui permettant de se déformer par flexion. A l'intérieur de ce tube 42 est disposé un câble conducteur ou une pluralité de câbles conducteurs tels que 44 dont les extrémités 44a, 44b font saillie hors des extrémités du tube 42. Sur la face externe du tube 42 est réalisée une tresse de blindage 48 qui s'étend sur toute la longueur du tube 42.

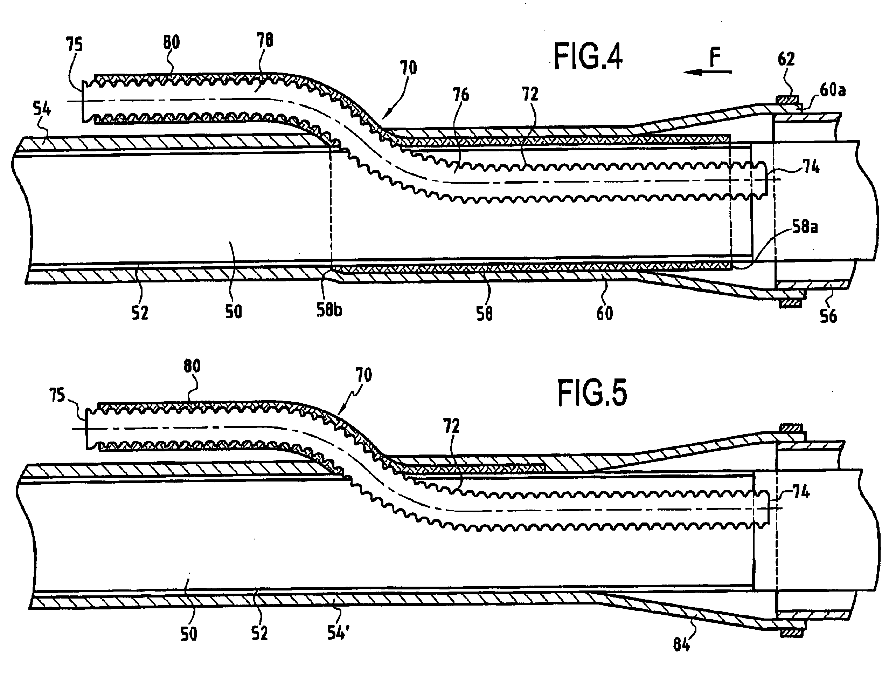

En se référant tout d'abord à la figure 4, on va décrire la mise en oeuvre de l'invention dans le harnais au niveau du câblage a un connecteur.

Sur la figure 4, on a représenté le toron de câbles 50 du harnais recouvert éventuellement d'un ruban de protection 52 et sur la partie courante duquel est réalisée une tresse de blindage 54 pour assurer un surtressage de cette partie de ce harnais. Sur cette figure, on a également représenté le raccord arrière 56 du connecteur (non représenté). Dans la zone de câblage du harnais et selon ce premier mode de mise en oeuvre une sous-tresse 58 est réalisée sur le toron, l'extrémité de cette sous-tresse 58a se terminant avant, mais préférentiellement à l'intérieur du raccord arrière du connecteur. La partie courante de la tresse 54 se prolonge par une portion de tresse 60 formant une "chaussette" qui recouvre la sous-tresse 58. La sous-tresse 58 comporte une extrémité arrière 58b à partir de laquelle elle est recouverte par la chaussette 60. L'extrémité libre 60a de la chaussette 60 est fixée sur le raccord arrière 56 du connecteur par une bande métallique de cerclage 62.

La sous-tresse 58 constitue un surtressage du harnais tandis que la chaussette peut être déformée pour permettre le déplacement du raccord arrière 56 selon la direction de la flèche F et autoriser ainsi le câblage des câbles du toron 50 sur le connecteur.

Selon l'invention, l'extrémité du harnais est équipée d'une gaine de réserve portant la référence générale 70. Cette gaine de réserve 70 est constituée essentiellement par un tube flexible 72 éventuellement cannelé dont une première extrémité 74 débouche au-delà de l'extrémité 58a de la sous-tresse 58 et dont la deuxième extrémité 75 est disposée à l'extérieur de la tresse 54 du harnais. Le tube 72 traverse ainsi la tresse 54 pour constituer une portion interne 76 et une portion externe 78. La portion externe 78 est recouverte par une tresse de blindage 80 qui est électriquement raccordée à la sous-tresse 58 et à la chaussette 60. Ainsi, la partie interne 76 du tube 72 se trouve à l'intérieur de la sous-tresse 58 entourant l'extrémité du harnais et fixée ainsi mécaniquement au toron du harnais.

Lorsque l'on veut adjoindre un ou plusieurs câbles électriques au câble du harnais raccordé au connecteur, il suffit d'utiliser un élément conducteur de modification 40 du type représenté sur la figure 2, d'introduire l'extrémité 44b de son câble conducteur dans le tube 72 pour qu'il fasse saillie hors de l'extrémité 74 de ce tube afin d'être câblé sur le connecteur et de raccorder électriquement la tresse 42 de l'élément 40 à la tresse 80 de la gaine de réserve.

Pour réaliser la connexion des tresses, on peut utiliser un prolongateur du type représenté sur la figure 3. Le prolongateur 82 est constitué par un cylindre conducteur dans lequel sont engagés mécaniquement l'extrémité du tube 72 constituant la gaine de réserve et l'extrémité du tube 42 de l'élément 40 (kit de blindage). Par ailleurs, les extrémités des tresses de blindage 48 et 80 de la gaine de réserve et de l'élément 40 sont raccordées entre elles par l'intermédiaire du prolongateur 82 et de bandes de serrage métalliques telles que 84 et 86. Bien entendu, d'autres moyens pourraient être utilisés pour raccorder électriquement la tresse de blindage de la gaine de réserve et la tresse de blindage de l'élément conducteur de modification 40.

Sur la figure 5, on a représenté une variante de réalisation du harnais conforme à l'invention dans la zone de câblage sur un connecteur. Ce mode de réalisation se distingue essentiellement du mode de réalisation représenté sur la figure 4 par le fait que le blindage de l'extrémité de connexion du harnais est réalisé uniquement à l'aide de la chaussette 84 qui est un prolongement de la tresse du blindage 54' de la partie courante du harnais. La gaine de réserve 70 est identique à celle de la figure 5 à l'exception du fait que la tresse de blindage 80 de la gaine de réserve 70 comporte une "queue de cochon" 86 qui est électriquement raccordée à la tresse de blindage formant la chaussette 84.

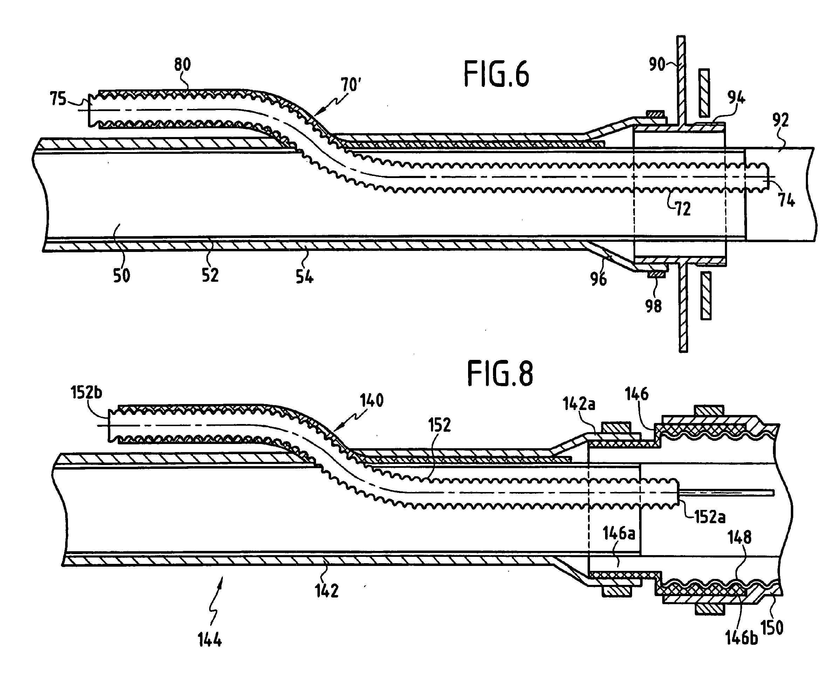

Sur la figure 6, on a représenté un exemple de réalisation du harnais électrique dans une zone de traversée d'une paroi 90. A gauche de la paroi 90, le harnais comporte une tresse de blindage 52 identique à celle de la figure 4 tandis que la droite de la cloison 90 la portion de harnais 92 est dépourvue de blindage.

La cloison 90 comporte un tube de traversée de cloison 94 dans lequel est engagé le harnais. La tresse de blindage 52 du harnais comporte une portion de plus grand diamètre 96 qui est fixée sur le tube de traversée 94 par une bande de cerclage 98. La gaine de réserve qui porte la référence 70' a une structure identique à celle qui est représentée sur la figure 5. Il faut simplement noter que la première extrémité 74 du tube 72 de la gaine de réserve s'étend au-delà de la cloison 90 et est destinée à être raccordée à une première extrémité d'un premier élément conducteur de modification 40 du type représenté sur la figure 2, alors que la deuxième extrémité externe 75 du tube 72 est destinée à être raccordée à un deuxième élément conducteur de modification.

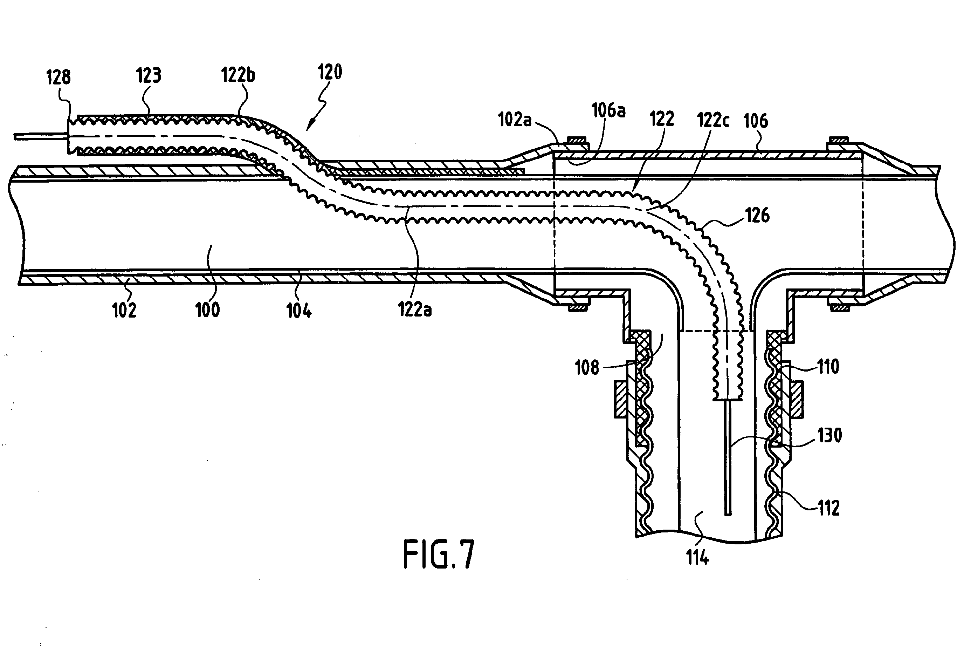

Sur la figure 7 on a représenté la réalisation d'un harnais conforme à l'invention dans une zone de dérivation.

Sur cette figure on a représenté le toron de câbles 100, la tresse de surtressage 102 et le rubane de protection 104 du conducteur principal du harnais. On a également représenté la pièce de dérivation 106 traversée par le conducteur principal du harnais. Sur la première extrémité 106a de la pièce de dérivation 106 ext fixée l'extrémité élargie 102a de la tresse 102.

La pièce de dérivation 106 comporte une ouverture latérale 108 sur laquelle est fixé l'adaptateur 110 du conduit 112 de la branche 114 du harnais. Sur l'adaptateur 110 est également fixée l'extrémité 116a de la tresse 116 de la branche 114.

De manière similaire à ce qui a été décrit précédemment le harnais est muni d'une portion de gaine de réserve 120 à proximité de l'extrémité 102a de la tresse 102. La gaine de réserve 120 est constitué par un tube souple 122. La partie médiane 122a du tube est insérée dans l'extrémité de la tresse 102. Sa première partie d'extrémité 122b traverse la tresse 102 et est donc extérieure au harnais. Elle est entourée d'une tresse 123. Enfin, sa deuxième partie d'extrémité 122c sort de la tresse 102 et se termine dans la pièce de dérivation 106, et son extrémité 124 débouche dans le conduit 112 de la branche 114 après un coude 126.

L'extrémité externe 128 de la gaine de réserve 120 est destinée à être raccordée à une extrémité d'un élément conducteur de modification ou kit de blindage 40 du type représenté sur la figure 2. Le raccordement peut-être réalisé par un prolongation du type représenté sur la figure 3.

De plus on peut prévoir, dans le tube 122, une aiguille de tirage 130 pour faciliter l'introduction du câble électrique de l'élément conducteur de modification 40 dans le tube 122.

Sur la figure 8 on a illustré la mise en place d'une portion de gaine de réserve 140 à proximité de l'extrémité 142a de la tresse de blindage 142 du harnais 144. L'extrémité 142a est fixée à la première extrémité 146a de la pièce de transition 146. Un conduit 148 avec sa tresse de blindage 150 sont fixés sur la deuxième extrémité 146b de la pièce de transition 146.

L'extrémité interne 152a du tube 152 de la gaine de réserve 140 débouche dans la pièce de transition 146 au-delà de l'extrémité 142a de la tresse 142. L'extrémité 152b du tube 152 est destinée a être raccordée à une extrémité d'un élément conducteur de modification ou kit de blindage 40.

## Revendications

1. Système de modification d'un harnais électrique surtressé, ledit harnais comprenant au moins un toron de câbles conducteurs (50) entouré par une tresse de surtressage (54) et au moins une extrémité de ladite tresse, ledit système de modification **se caractérisant en ce qu'**il comprend :
- au moins un élément conducteur de modification (40) constitué par au moins un câble conducteur (44) entouré par une tresse de blindage '48) ladite tresse présentant deux extrémités et le câble conducteur dépassant aux deux extrémités de la tresse ;
- au moins une portion de gaine de réserve (70, 70', 120, 140) comprenant une portion de tube souple (72, 122, 152) montée en partie dans la tresse (54) dudit harnais de telle manière qu'une première extrémité dudit tube débouche au-delà de l'extrémité de ladite tresse du harnais et que la deuxième extrémité du tube soit extérieure à ladite tresse du harnais (54) en la traversant, au moins ladite partie de portion de tube extérieure à la tresse (78) du harnais étant entourée par une tresse de surtressage (80) ; et
- des moyens de connexion (82, 84, 86) de tresse pour relier l'extrémité de la tresse (48) de l'élément conducteur de modification à l'extrémité de la tresse (80) entourant la partie extérieure dudit tube, ledit câble conducteur de l'élément conducteur de modification étant engagé dans ledit tube et débouchant à la première extrémité dudit tube.

2. Système de modification d'un harnais selon la revendication 1, **caractérisé en ce que** l'élément conducteur de modification comprend en outre un tube flexible (42) sur lequel est montée ladite tresse (48) et dans lequel est engagé ledit câble conducteur (44).

3. Système de modification d'un harnais selon l'une quelconque des revendications 1 et 2, **caractérisé en ce que** l'extrémité (60, 84) de la tresse (54) du harnais correspond à une extrémité du toron (50) de câbles du harnais, ladite extrémité étant destinée à être montée sur un connecteur électrique (56).

4. Système de modification d'un harnais selon l'une quelconque des revendications 1 et 2, **caractérisé en ce que** l'extrémité du toron de câbles (50) du harnais s'étend au-delà de ladite extrémité (96, 142a) de la tresse du harnais.

5. Système de modification d'un harnais selon la revendication 3, **caractérisé en ce que** ladite extrémité du harnais comporte une première tresse (58) entourant le toron de câbles (50) et dans laquelle est placée ladite gaine de réserve (70) et une deuxième tresse (60) déplaçable par rapport à la première tresse et présentant une première extrémité électriquement raccordée à la première tresse et une deuxième extrémité déplaçable destinée à être raccordée au raccord du connecteur (56), ledit tube (72) de la gaine de réserve sortant de ladite première tresse (58) au-delà de la première extrémité de ladite deuxième tresse (60).

6. Harnais électrique surtressé modifiable par adjonction d'au moins un câble électrique, ledit harnais comprenant au moins un toron de câbles conducteurs (50) entouré par une tresse de surtressage (54) et au moins une extrémité de ladite tresse, ledit harnais étant **caractérisé en ce qu'**il comprend en outre :
- au moins une portion de gaine de réserve (70, 70', 120, 140) comprenant une portion de tube souple (72, 122, 152) montée en partie dans la tresse (54) dudit harnais de telle manière qu'une première extrémité dudit tube débouche au-delà de l'extrémité de ladite tresse du harnais et que la deuxième extrémité du tube soit extérieure à ladite tresse du harnais, en la traversant au moins ladite partie de portion de tube extérieure (78) à la tresse du harnais (54) étant entourée par une tresse de surtressage (80), par quoi un élément conducteur de modification (40) est apte à être connecté à ladite deuxième extrémité de la portion de gaine de réserve.

7. Harnais selon la revendication 6, **caractérisé en ce qu'**il comprend une pluralité d'extrémités de tresse, au moins certaines desdites extrémités de tresse étant équipées d'une portion de gaine de réserve.

## Claims

1. A harness modification system for modifying a tightly-braided electrical harness comprising at least one bundle of conductor cables (50) surrounded by a tight braid (54), and at least one end of said braid, said modification system being **characterised in that** it comprises:
- at least one modification conductor element (40) constituted by at least one conductor cable (44) surrounded by a shielding braid (48), said braid presenting two ends, and the conductor cable projecting beyond both ends of the braid;
- at least one portion of spare sheath (70, 70', 120, 140) comprising a flexible tube portion (72, 122, 152) mounted in part inside the braid (54) of said harness so that a first end of said tube opens out beyond the end of said harness braid, and so that the second end of the tube is external to said braid (54) of the harness, passing through it, at least said portion of the tube that is external to the braid (78) of the harness being surrounded by a tight braid (80); and
- braid connection means (82, 84, 86) for connecting the end of the braid (48) of the modification conductor element to the end of the braid (80) surrounding the external portion of said tube, said conductor cable of the modification conductor element being engaged in said tube and projecting from the first end of said tube.

2. A harness modification system according to claim 1, **characterised in that** the modification conductor element further comprises a flexible tube (42) on which said braid (48) is mounted and in which said conductor cable (44) is engaged.

3. A harness modification system according to claim 1 or claim 2, **characterised in that** the end (60, 84) of the harness braid (54) corresponds to one end of the harness cable bundle (50), said end being for mounting on an electrical connector (56).

4. A harness modification system according to claim 1 or claim 2, **characterised in that** the end of the harness cable bundle (50) extends beyond said end (96, 142a) of the harness braid.

5. A harness modification system according to claim 3, **characterised in that** said harness end comprises a first braid (58) surrounding the cable bundle (50) and in which there is placed said spare sheath (70), and a second braid (60) that is movable relative to the first braid and that presents a first end electrically connected to the first braid and a second end that is movable for connection to the coupling of the connector (56), said spare sheath tube (72) leaving said first braid (58) beyond the first end of said second braid (60).

6. A tightly-braided electrical harness that is modifiable by adding at least one electrical cable, said harness comprising at least one conductor cable bundle (50) surrounded by a tight braid (54) and at least one end of said braid, said harness being **characterised in that** it further comprises:
- at least one portion of spare sheath (70, 70', 120, 140) comprising a flexible tube portion (72, 122, 152) mounted in part inside the braid (54) of said harness in such a manner that a first end of said tube extends beyond the end of said harness braid and that the second end of the tube is external to said harness braid, passing through it, at least said portion (78) of the tube that is external to the harness braid (54) being surrounded by a tight braid (80), whereby a modification conductor element (40) is suitable for being connected to said second end of the spare sheath portion.

7. A harness according to claim 6, **characterised in that** it presents a plurality of braid ends, at least some of said braid ends being fitted with respective spare sheath portions.

## Patentansprüche

1. System zur Modifizierung eines elektrischen Kabelbaums mit Überflechtung, wobei dieser Kabelbaum mindestens eine von einem Überflechtungs-Geflecht (54) umgebene Leiterkabellitze (50) und mindestens ein Ende dieses Geflechts beinhaltet,
**dadurch gekennzeichnet,**
**dass** es umfasst:
- mindestens ein Modifizierungs-Leiterelement (40), das aus wenigstens einem von einem Abschirmungsgeflecht (48) umgebenen Leiterkabel (44) gebildet wird, wobei dieses Geflecht zwei Enden aufweist und das Leiterkabel über die beiden Enden des Geflechts hinausführt,
- mindestens einen Reservehüllenabschnitt (70, 70', 120, 140), der einen Schlauchabschnitt (72, 122, 152) beinhaltet, welcher teilweise in dem Geflecht (54) dieses Kabelbaums eingesetzt ist, so dass ein erstes Ende dieses Schlauchs jenseits des Endes des Geflechts des Kabelbaums mündet und dass sich das zweite Ende des Schlauchs durch das Geflecht des Kabelbaums (54) hindurch außerhalb dessen befindet, wobei mindestens der genannte außerhalb des Geflechts (78) des Kabelbaums befindliche Teil des Schlauchabschnitts von einem Überflechtungs-Geflecht (80) umgeben ist, und
- Geflecht-Anschlussmittel (82, 84, 86), um das Ende des Geflechts (48) des Modifizierungs-Leiterelements mit dem Ende des Geflechts (80) zu verbinden, welches den außerhalb befindlichen Teil dieses Schlauchs umgibt, wobei dieses Leiterkabel des Modifizierungs-Leiterelements sich in diesem Schlauch in Eingriff befindet und am ersten Ende dieses Schlauchs mündet.

2. System zur Modifizierung eines Kabelbaums nach Anspruch 1,
**dadurch gekennzeichnet,**
**dass** das Modifizierungs-Leiterelement ferner einen Schlauch (42) umfasst, auf dem das genannte Geflecht (48) angebracht ist und in dem sich das genannte Leiterkabel (44) in Eingriff befindet.

3. System zur Modifizierung eines Kabelbaums nach einem der Ansprüche 1 und 2,
**dadurch gekennzeichnet,**
**dass** das Ende (60, 84) des Geflechts (54) des Kabelbaums einem Ende der Leiterkabellitze (50) des Kabelbaums entspricht, wobei dieses Ende dazu bestimmt ist, an einem elektrischen Anschlussstecker (56) angebracht zu werden.

4. System zur Modifizierung eines Kabelbaums nach einem der Ansprüche 1 und 2,
**dadurch gekennzeichnet,**
**dass** sich das Ende der Leiterkabellitze (50) des Kabelbaums über dieses Ende (96, 142a) des Geflechts des Kabelbaums hinaus erstreckt.

5. System zur Modifizierung eines Kabelbaums nach Anspruch 3,
**dadurch gekennzeichnet,**
**dass** das genannte Ende des Kabelbaums ein erstes Geflecht (58) enthält, das die Leiterkabellitze (50) umgibt und in dem die genannte Reservehülle (70) angeordnet ist, sowie ein zweites Geflecht (60) enthält, das gegenüber dem ersten Geflecht verschiebbar ist und ein erstes Ende aufweist, das elektrisch mit dem ersten Geflecht verbunden ist, und ein zweites verschiebbares Ende aufweist, das dazu bestimmt ist, mit dem Anschluss des Anschlusssteckers (56) verbunden zu werden, wobei der Schlauch (72) der Reservehülle aus dem ersten Geflecht (58) über das erste Ende des zweiten Geflechts (60) hinaus hervorragt.

6. Elektrischer Kabelbaum mit Überflechtung, der durch Hinzufügen von mindestens einem elektrischen Kabel modifiziert werden kann, wobei dieser Kabelbaum mindestens eine Leiterkabellitze (50), die von einem Überflechtungs-Geflecht (54) umgeben ist, und mindestens ein Ende dieses Geflechts enthält,
**dadurch gekennzeichnet,**
**dass** er ferner enthält:
- mindestens einen Reservehüllenabschnitt (70, 70', 120, 140), der einen Schlauchabschnitt (72, 122, 152) beinhaltet, welcher teilweise in dem Geflecht (54) dieses Kabelbaums eingesetzt ist, so dass ein erstes Ende dieses Schlauchs jenseits des Endes des Geflechts des Kabelbaums mündet und dass sich das zweite Ende des Schlauchs durch das Geflecht des Kabelbaums (54) hindurch außerhalb dessen befindet, wobei mindestens der genannte außerhalb des Geflechts des Kabelbaums (54) befindliche Teil des Schlauchabschnitts (78) von einem Überflechtungs-Geflecht (80) umgeben ist, wodurch ein Modifizierungs-Leiterelement (40) geeignet ist, an das genannte zweite Ende des Reservehüllenabschnitts angeschlossen zu werden.

7. Kabelbaum nach Anspruch 6,
**dadurch gekennzeichnet,**
**dass** er eine Vielzahl von Geflechtenden enthält, wobei wenigstens einige dieser Geflechtenden mit einem Reservehüllenabschnitt versehen sind.
